# EUROPEAN PATENT APPLICATION

(11) **EP 1 826 611 A1**
(43) Date of publication of application: **29.08.2007**
(21) Application number: 05809595.1
(22) Date of filing: 21.11.2005
(51) Int. Cl.: G03B 42/02

(54) **RADIATION IMAGE READING APPARATUS**

(30) Priority: 15.12.2004 JP 2004362774; 15.12.2004 JP 2004362801; 15.12.2004 JP 2004362816; 21.01.2005 JP 2005014349
(71) Applicant: Konica Minolta Medical & Graphic, Inc., Tokyo 163-0512 (JP)
(72) Inventor: ANDOU, Masakazu, Konica Minolta Medical&Graph.Inc., Hachioji-shi, Tokyo 192-8505 (JP)
(74) Representative: Rees, Alexander Ellison
(86) International application number: PCT/JP2005/021350
(87) International publication number: WO 2006/064636

(57) **Abstract**

A radiation image reading apparatus having a front plate holding means, a back plate holding means, and a conveyance means for conveying at least either of the holding means between a cassette joint position and a position for reading radiation image information that substantially parallelly separates a front plate and a back plate. The conveyance means has a first link 73 whose upper end is pivotably attached to a holding means conveyed and whose lower end is vertically movably attached to an apparatus body; a second link 74 whose upper end is pivotably attached to the apparatus body and whose lower end is vertically movably attached to a holding means conveyed; a connection shaft 754 for pivotably connecting the first link 73 and the second link 74 at the portion where they cross; and actuators 71 and 72 for vertically driving the lower end of either of the links.

## Description

### TECHNICAL FIELD

The present invention relates to a radiation image reading apparatus which reads radiation image information accumulated in a stimulable phosphor sheet.

### BACKGROUND ART

In order to electrically store or send digitized radiation image information, which is typically generated in hospitals, a great number of such radiation image forming apparatuses have been used which output image information as digital data. As the radiation image forming apparatuses which output the digital image data, the radiation image reading apparatuses which employ a stimulable phosphor sheet are well known.

The stimulable phosphor sheet accumulates the detected radiation energy as well as is affected by a portion of radiation energy which has penetrated through a subject. Further, when laser rays of a predetermined wave length are applied, the radiation energy accumulated in stimulable phosphor sheet can be obtained as stimulated light. The stimulated light is converted to electrical signals by a photo-electrical conversion element, such as a photo-multiplier.

The radiation image reading apparatus which reads radiation image information from the stimulable phosphor sheet, is, for example, disclosed in Patent Document 1. In this apparatus, a contact conveyance method is used, in which a flexible stimulable phosphor sheet is picked up, by a suction member, from a container, and the stimulable phosphor sheet is conveyed by paired nip rollers. However, in the contact conveyance method, since the surface of the stimulable phosphor sheet is pressed by the paired nip rollers, if the paired nip rollers are soiled or covered with dust, the surface of the stimulable phosphor sheet can be soiled or damaged, which results in a shortered functional life of the stimulable phosphor sheet, being the worst demerit. Further any damage or debris on the surface of stimulable phosphor sheet appears as noise on the read image, which will not provide an accurate image for diagnosis.

As a method to overcome the above problems, a noncontact conveyance method is proposed, in which the stimulable phosphor sheet is adhered onto a rigid plate, which is then conveyed (while the surface of the stimulable phosphor sheet itself does not contact any rollers). Patent Document 2 discloses such a radiation image reading apparatus employing this method.

The stimulable phosphor sheet, which is read by the apparatus, is accommodated in a thin and portable cassette during use. The cassette is structured of a back plate adhered to the stimulable phosphor sheet, and a front plate which covers the stimulable phosphor sheet.

A locking pin engages the front plate to the back plate. The locking is structured to switch between an engaged condition (being locked) and a released condition (being unlocked). Under the engaged condition, the back plate is connected to the front plate, while under the released condition, the back plate and the font plate are separable. Further, the back plate is formed of a high magnetic material, by which the back plate is attracted to a moving plate, which will be detailed later.

Inside the radiation image reading apparatus disclosed in Patent Document 2, a conveyance means, a sub-scanning means and a main scanning means are mounted. After the cassette is inserted into the radiation image reading apparatus, the front plate of the cassette is supported by the conveyance means, whereby the locked condition is released by an ON/OFF mechanism, after which the conveyance means carries the back plate to the sub-scanning means.

The sub-scanning means is structured of the moving plate and a sub-scanning rail which moves the moving plate up and down. A magnet is mounted on the moving plate, and when the back plate contacts the moving plate by the rotation of the conveyance means, the back plate is attracted by the magnet. Next, the conveyance means rotates to separate from the moving plate, back plate is separated from the front plate.

The moving plate, attracted to the back plate conveys the back plate upward along a sub-scan rail (to be scanned). During the sub-scan operation, the main scanning means scans the stimulable phosphor sheet at predetermined wave lengths of laser rays, whereby the generated stimulated light is detected as electrical signals by a photo-electrical conversion element, such as a photo-multiplier.
Patent Document 1: Unexamined Japanese Patent Application Publication No. 2004-109,252
Patent Document 2: Unexamined Japanese Patent Application Publication No. 2002-156,716

### DISCLOSURE OF THE INVENTION

### PROBLEMS TO BE SOLVED BY THE INVENTION

However, in the radiation image reading apparatus disclosed in Patent Document 2, since the cassette is inserted at an angle from the front of the apparatus, fairly large working space is necessary in front of the apparatus. Further, since the cassette is divided into a front plate and a back plate by the rotation of the conveyance means, fairly large space is also necessary in the horizontal direction within the apparatus. Still further, since the main scanning means is mounted above a rotation space of the conveyance means, and sub-scanning is conducted while the back plate is conveyed upward, additional space is necessary in the vertical direction, accordingly, installation of the radiation image reading apparatus is adversely limited from the view point of the spaces.

In addition, working space is also necessary for the radiation image reading apparatus, because if the cassette jams in the conveyance means, the operator must pick up the cassette from a front side, or because the operator cleans the inside of apparatus during normal maintenance work, accordingly it is very difficult to downsize the apparatus.

Still further, debris, such as grime, dust, and human hair, often adhere to the stimulable phosphor sheet or in the image reading section, which results in abnormal images. Though the stimulable phosphor sheet and the image reading section are cleaned often, re-photography is required at that time, or the medical diagnosis is interrupted, accordingly, it is essential that the debris is easily removed, and cleaning work is simply conducted.

To clean the surface of the stimulable phosphor sheet, disclosed is a brush-shaped member or an adhesive roller member, mounted on the conveyance path of the stimulable phosphor sheet, which touch to clean the surface of the stimulable phosphor sheet.

However, both members serve as a cleaning means of only the conveyed stimulable phosphor sheet, not of the image reading section which is fixed.

Further, when the cleaning method is used having a cleaning means, such as the brush or adhesive roller member, both mounted on the conveyance path of the stimulable phosphor sheet, since the stimulable phosphor sheet moves along the image reading section, cleaning is conducted by each reading operation, and the cleaning means carries the removed debris. If the cleaning operation is conducted often, the removed debris again return to the stimulable phosphor sheet, or adhere onto other members, which would likely result in defective images.

The problem of the present invention is to downsize the radiation image reading apparatus, which can be easily installed, and to secure the working space for maintenance.

Further, another problem of the present invention is to provide a radiation image reading apparatus, in which the image reading section and the stimulable phosphor sheet are easily cleaned, as well as the arbitral cleaning operations which are also easily conducted.

### THE MEANS TO SOLVE THE PROBLEMS

In order to overcome the above problems, the invention described in claim 1 is a radiation image reading apparatus which reads out radiation image information from a stimulable phosphor sheet enclosed in a cassette in which a back plate attached to the stimulable phosphor sheet and a front plate to cover the stimulable phosphor sheet are engaged,
wherein the radiation image reading apparatus is characterized in that the radiation image reading apparatus includes a front plate holding means which holds the front plate, a back plate holding means which holds the back plate, and a conveyance means which conveys at least either one of the front plate holding means or the back plate holding means, between an engaging position where the front plate and the back plate are engaged as a cassette and a separating position where the front plate and the back plate are separated to be parallel to each other, wherein the conveyance means includes a first link whose upper end is pivotably attached to the holding means to be conveyed, and whose lower end is vertically movably attached to the radiation image reading apparatus, a second link whose upper end is pivotably attached to an apparatus main body, and whose lower end is vertically movably attached to the holding means to be conveyed, a connection shaft which pivotably connects the first link and the second link at a portion where the first link and the second link cross, and an actuator which vertically drives the lower end of either one of the first link and the second link.

Based on the invention described in claim 1, since either one of the holding means is conveyed between the engaging position of the cassette and the separating position of the same, and further since the front plate and the back plate can be separated to be parallel to each other, a scanning means can move between them to read radiation image information from the stimulable phosphor sheet, and thereby the radiation image reading apparatus can be downsized. Further, since the actuator vertically drives the lower end of either one of the first link and the second link, said link is rotated, and the other link is also rotated due to the connection shaft, and its lower end is moved vertically, whereby the holding means is conveyed horizontally.
According to this conveyance mechanism, since it is not necessary to provide a driving device under the holding means, the radiation image reading apparatus can be shortened in height and totally downsized.

Still further, since the actuator sends down the lower ends of both links, both links can be vertically arranged and accommodated between an assembling position on the radiation image reading apparatus and the holding means to be conveyed, whereby essential space for maintenance work is obtained at a space where the holding means is conveyed.

The invention described in claim 2 is the radiation image reading apparatus of claim 1, which further includes a position regulating means which regulates the back plate holding means at a position where radiation image information is read, and a pressing means which presses the back plate holding means against the position regulating means.

Based on the invention described in claim 2, the pressing means presses the back plate holding means against the position regulating means, whereby the back plate holding means can be properly fixed at a position where radiation image information is read.

The invention described in claim 3 is the radiation image reading apparatus of claim 2, which further includes an urging means which pushes the pressing member toward the position regulating member.

Based on the invention described in claim 3, the pressing means is pushed toward the position regulating means by the urging means, whereby the back plate holding means can be properly fixed.

The invention described in claim 4 is the radiation image reading apparatus of claim 2 or 3, wherein a pressing force is released from the pressing member, due to the shift of the holding member from the separating position of the holding means to the engaging position, conducted by the conveyance means, and wherein the pressing force is applied to the pressing member, due to the shift of the holding member from the engaging position to the separating position, conducted by the conveyance means.

Based on the invention described in claim 4, since the pressing force is released from the pressing member, during the shift of the holding member from the separating position of the holding means to the engaging position, conducted by the conveyance means, further, since the pressing force is applied to the pressing member, during the shift of the holding member from the engaging position to the separating position, conducted by the conveyance means, the pressing member can be operated by only motive energy of the conveyance means, without using any specific motive energy, which simplifies the overall structure of the radiation image reading apparatus.

The invention described in claim 5 is the radiation image reading apparatus of any one of claims 2 - 4, wherein the pressing member includes a first lever which is movably attached to the apparatus main body, and is moved by the holding member which is conveyed by the conveyance means from the reading position of the separating position and is directed toward the engaging position, a second lever which works with the first lever, and is moved by the holding member which is conveyed by the conveyance means from the engaging position and is directed toward the separating position, and a spring both ends of which are connected to the first lever and to the apparatus main body, and which forces the first lever to either the engaging position or the separating position.

Based on the invention described in claim 5, since a first lever is moved by the holding means, which is conveyed by the conveyance means from the reading position, and is directed toward the engaging position, and since the first lever is forced by the spring toward the engaging position, the pressing force is released from the holding means, further, since the first lever is moved, which works with the second lever by the holding means which is conveyed from the engaging position and is directed toward the separating position, and since the first lever is forced toward the separating position by the spring, the pressing force is applied to the holding member, accordingly, the pressing means can be operated by only the motive energy of the conveyance means, which simplifies the overall structure of the radiation image reading apparatus.

The invention described in claim 6 is the radiation image reading apparatus of any one of claims 1 to 5, wherein a separation assisting means, which assists the holding means to separate from either the engaging position or the separating position, is mounted on the holding means which is conveyed by the conveyance means.

Based on the invention described in claim 6, either one of the holding means is conveyed between the engaging position of the cassette and the separating position of the cassette, and the front plate and the back plate are separated to be parallel to each other, whereby the scanning means is moved between the front plate and the back plate, and reads radiation image information from the stimulable phosphor sheet, accordingly the radiation image reading apparatus can be downsized. Further, on at least one of the holding means to be conveyed by the conveyance means, the separation assisting means is mounted to assist the holding means to separate from the separating position or the engaging position, whereby force which is necessary for starting the holding means is reduced, and a load on the conveyance means can also be reduced.

The invention described in claim 7 is the radiation image reading apparatus of any one of claims 1 to 6, wherein the holding means, which is conveyed by the conveyance means, includes a magnet which attracts the front plate or the back plate, and a first separation assisting means which helps either the front plate or the back plate both attracted by the magnet, to separate in advance from any one of the edges of the front plate or the back plate.

Based on the invention described in claim 7, the first separation assisting means helps the front plate or the back plate, both attracted by the magnet, to initially separate, the front plate or the back plate can be separated from any one of the edges of the front plate or the back plate, by a force which is smaller than that of the separation from the total surface of the front plate or the back plate, whereby the load on the conveyance means can be reduced.

The invention described in claim 8 is the radiation image reading apparatus of any one of claims 1 to 7, further including a second separation assisting means which separates the holding means in a moving direction, when the holding means is conveyed from a position where a link is substantially vertical.

At the position where the link is substantially vertical, the direction of force applied to the link of an actuator becomes substantially perpendicular to a moving direction of the holding means, whereby a large initial force is required for starting of the holding means. However, based on the invention described in claim 8, since the holding means to be conveyed is separated by the second separation assisting means in a moving direction, the link is slanted, and when the holding means starts, the load onto the actuator can be reduced.

The invention described in claim 9 is the radiation image reading apparatus of claim 8, further including a vertically moving roller which is mounted on the apparatus main body, wherein the second separation assisting means is mounted on a surface which is adjacent to the roller of the holding member to be conveyed, and specifically the second separation assisting means is a cam mounted on a surface, which faces to the roller, of the holding member to be conveyed, wherein when the roller goes upward, the cam is pressed by the roller and guides the holding means in the conveyance direction.

Based on the invention described in claim 9, when the roller goes upward, the holding means to be conveyed is guided in the conveyance direction through the cam, whereby the link is slanted, and when the holding means to be conveyed starts to move, the load on the actuator can be reduced.

The invention described in claim 10 is the radiation image reading apparatus of claim 9, wherein both the roller and the cam are mounted on plural positions.

Based on the invention described in claim 10, since plural rollers and cams are mounted on plural positions, the plural rollers can engage the cams at different timings to start the holding means, whereby when the holding means to be conveyed starts to move, the load on the actuator can be reduced.

The invention described in claim 11 is the radiation image reading apparatus of claims 9 or 10, wherein the roller is driven by the actuator, and the roller and the lower end of the first link are connected by a linking mechanism which allows the lower end of the first link to go upward, after the roller goes upward.

Based on the invention described in claim 11, the actuator raises the roller, after which the link mechanism raises the rollers and the lower end of the first link, that is, the holding means to be conveyed is initially moved by the roller, after which the lower end of the first link is raised, whereby the holding means can be conveyed, and when the holding means to be conveyed starts, the load on the actuator can be reduced.

The invention described in claim 12 is a radiation image reading apparatus, which allows either one of
a holding section which movably supports a stimulable phosphor sheet, or an image reading section which is arranged to be oppose the front of the stimulable phosphor sheet, and radiates exciting light to read image information, to move relatively against each other, and which obtains said image information, wherein a first cleaning means is mounted on the holding section, and when either one of the holding section or the image reading section moves relatively, the first cleaning means comes into contact with the image reading section, and cleans the image reading section.

Based on the invention described in claim 12, since either one of the holding section which movably supports the stimulable phosphor sheet or the image reading section is moved relatively against each other, the first cleaning means mounted on the holding section comes into contact with the image reading section, and cleans it. Accordingly the cleaning means makes the obtained image to be satisfactory.

Further, the first cleaning means simply cleans the image reading section in the same way as a reading operation in which the exciting light is radiated onto the stimulable phosphor sheet to read image information, conducted by the reading section, accordingly no other complicated mechanism is required for cleaning, which is beneficial in the manufacture and lowers its cost.

The invention described in claim 13 is the radiation image reading apparatus of claim 12, further includes a control means, wherein the first cleaning means is mounted ouside a reading range of the stimulable phosphor sheet, in the holding section, wherein when image information carried in the stimulable phosphor sheet is read, the control means controls either one of the holding section or the image reading section in such a way that the image reading section is positioned within the reading range of the stimulable phosphor sheet, and wherein when the cleaning operation is conducted by the first cleaning means, the control means controls either one of the holding section or the image reading section in such a way that the image reading section comes into contact with the first cleaning means mounted only outside the reading range.

Based on the invention described in claim 13, the first cleaning means is mounted only outside the reading range of the stimulable phosphor sheet in the holding section, and when image information, carried in the stimulable phosphor sheet, is read, the control means controls either one of the holding section or the image reading section in such a way that the image reading section is positioned within the reading range of the stimulable phosphor sheet, and further, when the first cleaning means conducts its cleaning operation, the control means controls either one of the holding section or the image reading section in such a way that the image reading section only comes into contact with the first cleaning means mounted outside the reading range. Accordingly the first cleaning means need not clean the image reading section during every reading operation, that is, the first cleaning means only periodically cleans it. Therefore, any foreign particles on the first cleaning means are prevented from being transferred onto the image reading section as well as onto other sections, accordingly the cleaning means more ensures that the obtained image is satisfactory.

The invention described in claim 14 is the radiation image reading apparatus of claim 12 or 13, wherein the first cleaning means is formed of a soft material.

Based on the invention described in claim 14, the first cleaning means cleans the image reading section without damaging the image reading section.

The invention described in claim 15 is the radiation image reading apparatus of any one of claims 12 - 14, the first cleaning means has a static discharge function.

Based on the invention described in claim 15, the first cleaning means cleans the surface of the image reading section and of the stimulable phosphor sheet, as well as discharges static electricity.

The invention described in claim 16 is the radiation image reading apparatus of any one of claims 12 - 15, which also includes a first cleaning means detachably mounted on the holding means.

Based on the invention described in claim 16, since the first cleaning means is detachably mounted on the holding means, when a relatively large amount of debris is attached to each cleaning means during the cleaning operation, the first cleaning means can be exchanged with a new one.

The invention described in claim 17 is the radiation image reading apparatus of any one of claims 12 - 16, further includes a second cleaning means which is mounted on the image reading section, and when either one of the holding section or the image reading section relatively move to each other, the second cleaning means comes into contact with the stimulable phosphor sheet, and cleans the same.

Based on the invention described in claim 17, since either one of the holding section or the image reading section is relatively moved, the second cleaning means mounted on the image reading section comes into contact with the stimulable phosphor sheet, and the stimulable phosphor sheet is thereby cleaned. Accordingly the second cleaning means ensures that the obtained image is satisfactory. Further, since the second cleaning means simply cleans the image reading section in the same way as a reading operation in which the exciting light is radiated onto the stimulable phosphor sheet to read image information, conducted by the reading section, accordingly no complicated mechanism is required for cleaning, which is beneficial in the manufacture and lowers its cost.

### EFFECTS OF THE INVENTION

Based on the invention described in claim 1, it is possible to down-size the radiation image reading apparatus, whereby the apparatus can be installed in a relatively small space. Due to this, the apparatus can be installed near the desk of a private-practice doctor or a radiological technologist, to read the radiation image in the cassette. Further, the working space for the maintenance of the apparatus can be secured.

Further, based on the invention described in claim 12, since either one of the holding section which movably supports the stimulable phosphor sheet or the image reading section moves relatively against each other, the first cleaning means mounted on the holding section comes into contact with the image reading section, and cleans it. Accordingly the cleaning means ensures that the obtained image will be satisfactory. By such a simple method, the first cleaning means cleans the image reading section, and no complicated cleaning mechanism is required, which is beneficial in the manufacture and lowers its cost.

### BRIEF DESCRIPTION OF THE DRAWINGS

Fig. 1 is a perspective view of a radiation image reading apparatus relating to the present invention.
Fig. 2 is a perspective view showing the exterior of the top, front and left surfaces of the radiation image reading apparatus.
Fig. 3 is an separated perspective view of cassette 1000 of the radiation image reading apparatus.
Fig. 4 is a vertical cross-section of the radiation image reading apparatus relating to the present invention.
Fig. 5 is a perspective view of the radiation image reading apparatus relating to the present invention.
Fig. 6 is a perspective view showing the inner structure of the radiation image reading apparatus relating to the present invention.
Fig. 7 is a perspective view showing the inner structure of the radiation image reading apparatus relating to the present invention.
Fig. 8 is a perspective view showing a relevant part of the inner structure of the radiation image reading apparatus relating to the present invention.
Fig. 9 is a perspective view showing another relevant part of the inner structure of the radiation image reading apparatus relating to the present invention.
Fig. 10 is a perspective view showing yet another relevant part of the inner structure of the radiation image reading apparatus relating to the present invention.
Fig. 11 is a schematic view of a moving mechanism of the radiation image reading apparatus relating to the present invention.
Fig. 12 is a schematic view of a moving mechanism of the radiation image reading apparatus relating to the present invention, wherein (a) represents a transfer position of the back plate, (b) represents a separating position of the back plate, and (c) represents a reading position.
Fig. 13 is a schematic view of a tumbler mechanism of the radiation image reading apparatus relating to the present invention, wherein a moving plate is released in (a), while the moving plate is set in (b).
Fig. 14 is a perspective view showing that the moving plate shown in Fig. 11 is set by the tumbler mechanism.
Fig. 15 a perspective view showing that the moving plate shown in Fig. 11 is released by the tumbler mechanism.
Fig. 16 is a top view of partially cross-sectioned image reading head 10 of the radiation image reading apparatus relating to the present invention.
Fig. 17 is another top view of partially cross-sectioned image reading head 10 of the radiation image reading apparatus relating to the present invention.
Fig. 18 is yet another top view of partially cross-sectioned image reading head 10 of the radiation image reading apparatus relating to the present invention.
Fig. 19 is a schematic view showing the total structure of the radiation image reading apparatus relating to the present invention.
Fig. 20 shows the front, top and left sides of image reading head 10A, and conveyance mechanisms of conveyance section 5A and stimulable phosphor sheet 1003.
Fig. 21 shows relevant parts of contacting portions of second cleaning means 201A and stimulable phosphor sheet 1003 in Fig. 20.
Fig. 22 shows relevant parts of the lower section of stimulable phosphor sheet 1003 in Fig. 20.
Figs. 23 are side views of image reading head 10A,
wherein the condition before stimulable phosphor sheet 1003 is moved is shown in (a), while in (b), the condition after stimulable phosphor sheet 1003 is moved upward, and slit 83A is cleaned by first cleaning means 200A.

### DESCRIPTION OF THE PREFERRED EMBODIMENTS

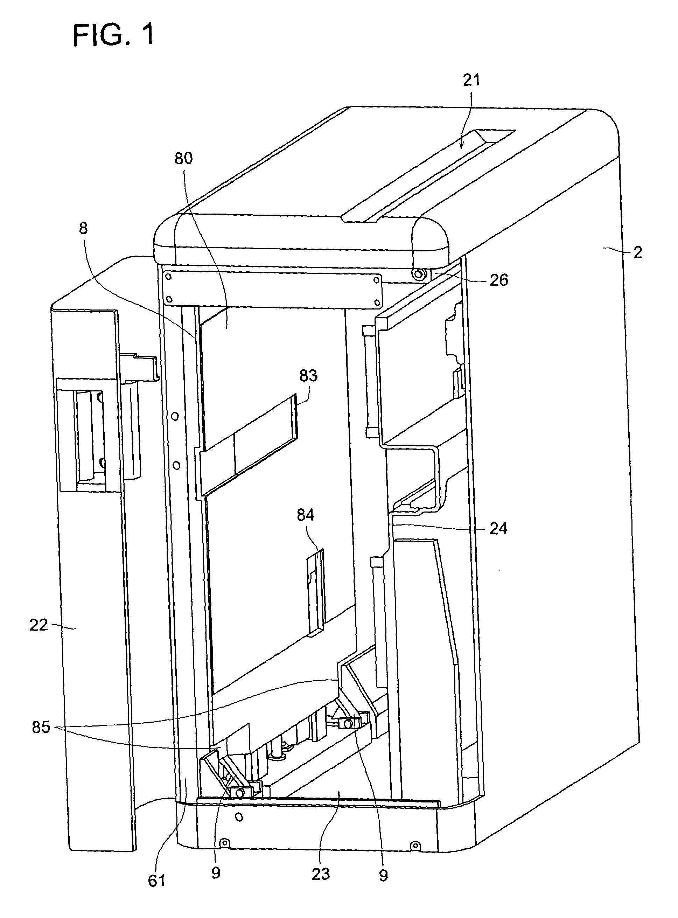

An embodiment of the present invention will now be detailed. Fig. 1 is a perspective view of the radiation image reading apparatus relating to the present invention.

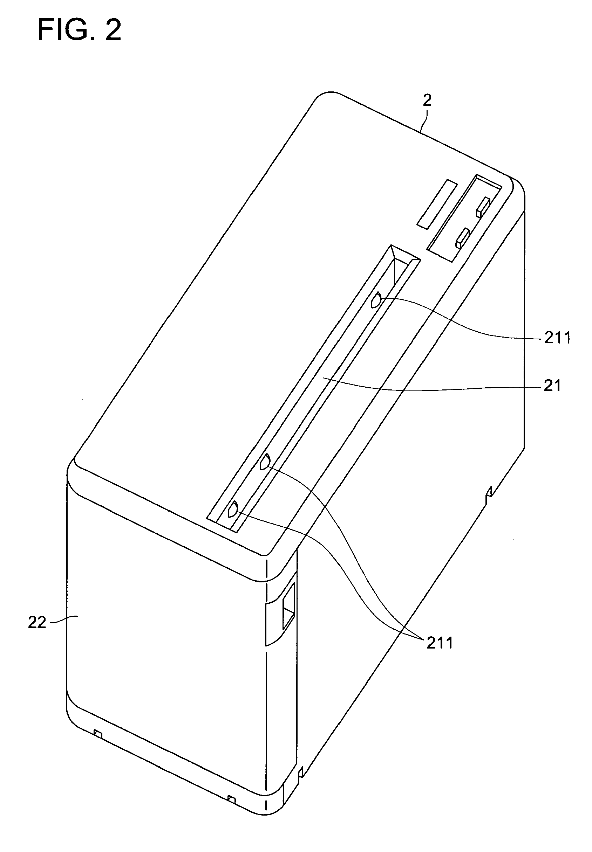

Fig. 2 is a perspective view showing the exterior of the top, front and left surfaces of the radiation image reading apparatus. The radiation image reading apparatus, has cuboid chassis 2, on which cassette inlet 21 is mounted, to some degree, wider than the width of cassette 1000, and in which various devices are provided to read information of cassette 1000.

On the shorter side of chassis 2, checking lid 22 is provided. In Fig. 1, in which checking lid 22 is open. Plural rollers 211 are mounted in chassis 2, that is, plural rollers 211 are mounted on both longer sides of cassette inlet 21, from which portions of rollers 211 are exposed.

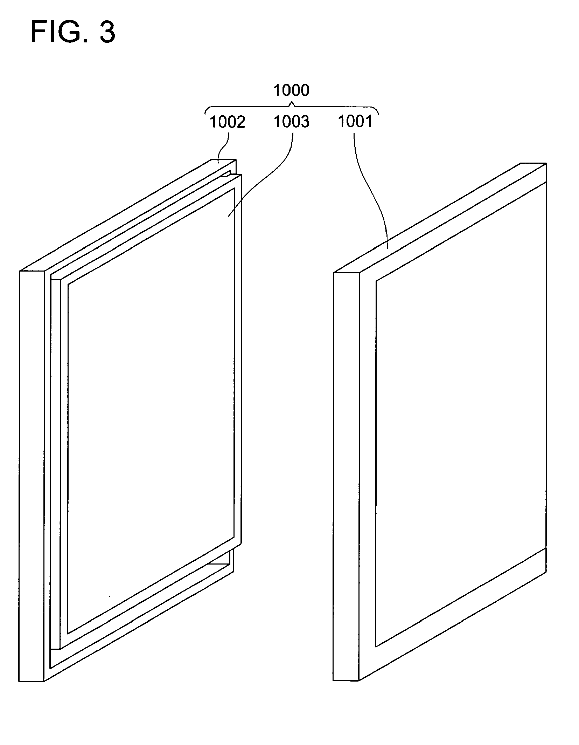

Cassette 1000 will be detailed while referring to the perspective view in Fig. 3. Cassette 1000 is hollow shaped. That is, cassette 1000 is formed of back plate 1002 which is a box whose front is open, front plate 1001 which is a box whose back is open, and stimulable phosphor sheet 1003 facing the front, installed on back plate 1002. The surface of stimulable phosphor sheet 1003 faces to be covered by front plate 1001, and back plate 1002 is engaged with front plate 1001, that is, stimulable phosphor sheet 1003 is installed in the inner space between front plate 1001 and back plate 1002. Back plate 1002 is formed of a magnetic material.

Further, since front plate 1001 can be separated from back plate 1002, and when it is so separated stimulated phosphor sheet 1003 is exposed to an open space. A locking mechanism (which is not illustrated) is mounted at the center of the side surface. When the locking mechanism is pressed, front plate 1001 and back plate 1002 change between an engaging condition and a released condition (in which a push-to-ratching mechanism is used). Further, back plate 1002 is formed of a magnetic material. Still further, a bar-code showing the size of cassette 1000 is attached on cassette 1000.

Concerning stimulable phosphor sheet 1003, a stimulable phosphor material, for example, such as BaFBr:Eu, and BaFI:Eu, is coated on a support, which forms a coated layer of the stimulable phosphor material, or CsBr:Eu is evaporated on a support, which forms a columnar crystal layer of the stimulable phosphor material. The radiation image reading apparatus of the present invention is specifically suitable for reading a stimulable phosphor sheet including the columnar crystal layer of the stimulable phosphor material which tends to be damaged by external force.

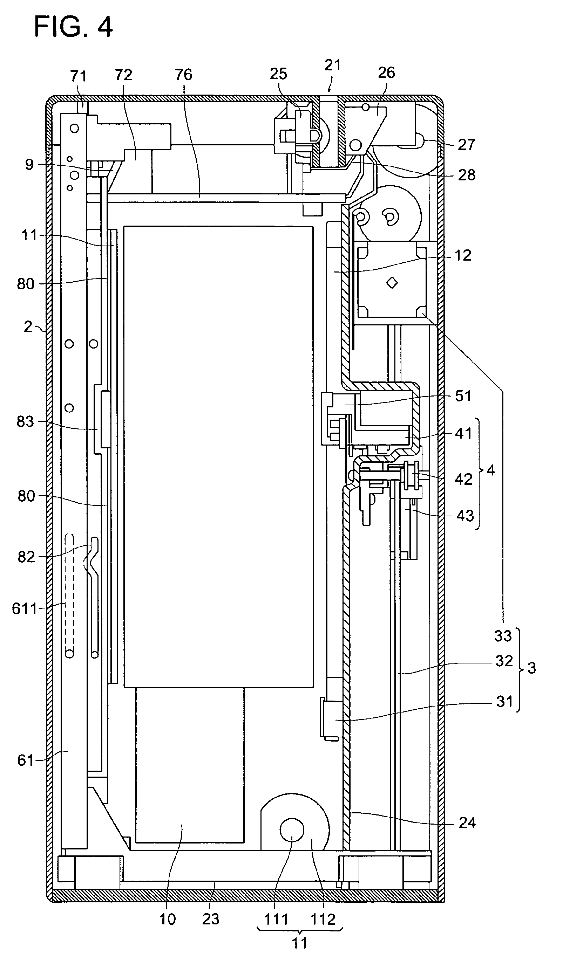

Fig. 4 is a sectional view of the apparatus carrying cassette 1000, viewed from the side of checking lid 22. Bar code reader 25 and shutter unit 26 are mounted on cassette inlet 21. Bar code reader 25 reads information of the size of cassette 1000 through a bar code (which is not illustrated) attached to back plate 1002 of cassette 1000. Shutter unit 26 is driven by shutter motor 27 to open or close cassette inlet 21.

In Fig. 4, a right section of cassette inlet 21 is formed to be thinner than the left section. In the right section of cassette inlet 21, included are: elevating mechanism 3 which sends cassette 1000 downward, and raises to eject cassette 10000 after reading, holding mechanism 4 which holds front plate 1001 of cassette 1000 in the apparatus, and a locking mechanism which pushes a push-to-latching mechanism of cassette 1000, as well as holding mechanism 24 which holds the above-described sections, whereby holding plate 24 which holds the above is vertically mounted on base 23 of the apparatus. Cassette 1000 is inserted in such a way that the side of front plate 1001 of cassette 1000 comes into contact with holding plate 24, and it is important that the open-close lock faces inward.

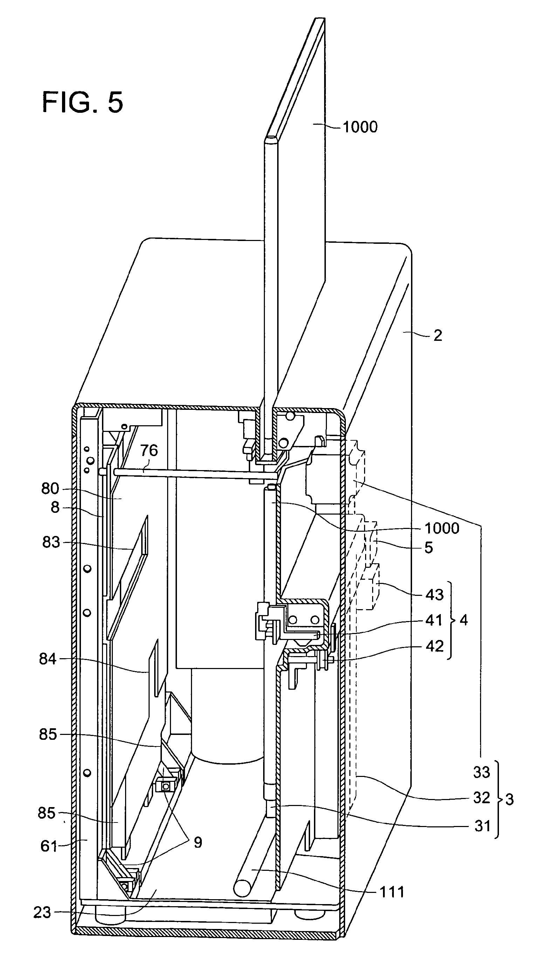

The locking mechanism is not shown in Fig. 4, but which is arranged more inwardly than cassette 1000 in Fig. 4 (see also Fig. 5). Elevating mechanism 3 is structured of elevating plate 31 which supports inserted cassette 1000, an elevating plate holding section (which is not illustrated) which holds elevating plate 31, elevating belt 32 which is connected to the elevating plate holding section, and elevating motor 33 which rotates elevating belt 32. By the rotation of elevating motor, elevating belt 32 rotates and elevating plate 31 goes up or down.

Holding mechanism 4 is structured of pushing section 41 which pushes cassette 1000 in a width direction (which is perpendicular to the illustrated plane of Fig. 4), horizontal belt 42 which is connected to pushing section 41, and width adjusting motor 43 which rotates horizontal belt 42. By the rotation of width adjusting motor 43, horizontal belt 42 rotates and pushing section 41 is driven in the width direction of cassette 1000. Said driven pushing section 41 pushes cassette 1000 inward in Fig. 4. In addition, an engaging section is mounted on holding plate 24, which is not illustrated, but engages cassette 1000 pushed by pushing section 41, located more inwardly than cassette 1000 of Fig. 4. By pushing section 41 and the engaging section, cassette 1000 is supported from both sides.

Fig. 5 is a perspective view to show the condition when cassette 1000 has been inserted in cassette inlet 21, and cassette 1000 is held by holding mechanism 4. Firstly, cassette 1000 is inserted into cassette inlet 21 while the shutter is closed, bar code reader 25 reads the bar code of cassette 1000 to recognize size information of cassette 1000. If the insertion direction of cassette 1000 is not corect, a warning is shown to the user.

Next, shutter motor 27 is activated to open shutter unit 26. Shutter motor 27 is stopped when the full-open condition of shutter unit 26 is detected.

After shutter unit 26 is open, cassette 1000 drops down from shutter unit 26 and is positioned on elevating plate 31. At this time, the elevating plate has reached the highest position. After cassette 1000 is detected on elevating plate 31, cassette 1000 is adjusted vertically so that the pushing section of cassette 1000 is aligned with the locking mechanism.

After cassette 1000 is completely accommodated in the apparatus, shutter motor 27 is re-activated to close shutter unit 26. When complete closing of shutter unit 26 is detected, shutter motor 27 stops to rotate.

Next, pushing section 41 pushes cassette 1000 from the near side being the inserting position to the far side being the reading position, on Fig. 5, then cassette 1000 is pressed against the engaging section, whereby cassette 1000 is supported from both sides. In this supported condition, when the locking mechanism is activated, front plate 1001 and back plate 1002 are released.

In Fig. 4, the left section of cassette inlet 21 includes a separation mechanism which separates back plate 1002 from front plate 1001 of cassette 1000, and holds it, as front plate 1001 and back plate 1002 are separable from each other, image reading head 10 which scans the stimulable phosphor sheet mounted on separated back plate 1002, and linear motor 11 which drives (which means "sub-scanning") image reading head 10 perpendicular to the sectional plane of Fig. 4.

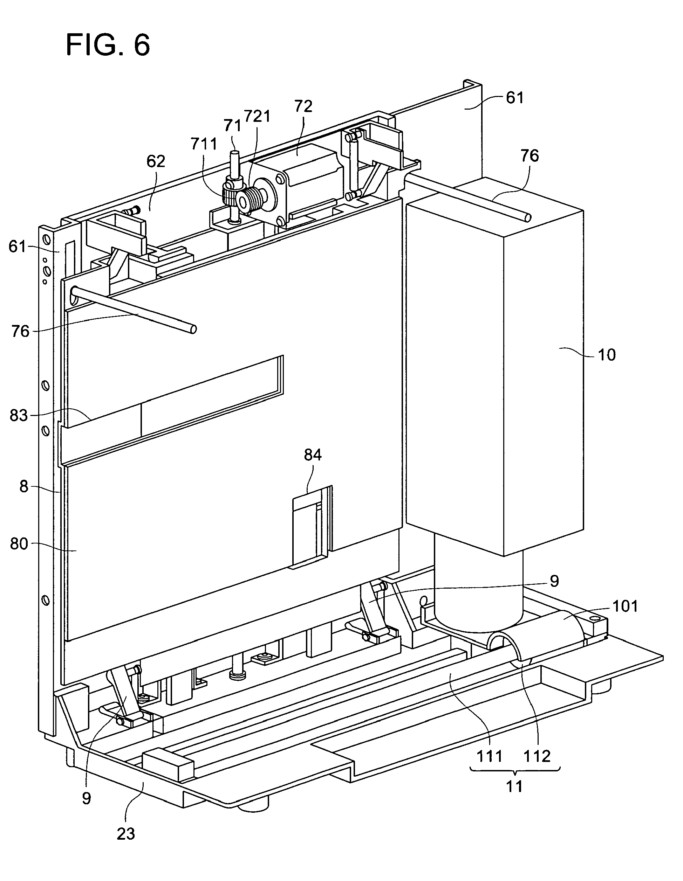

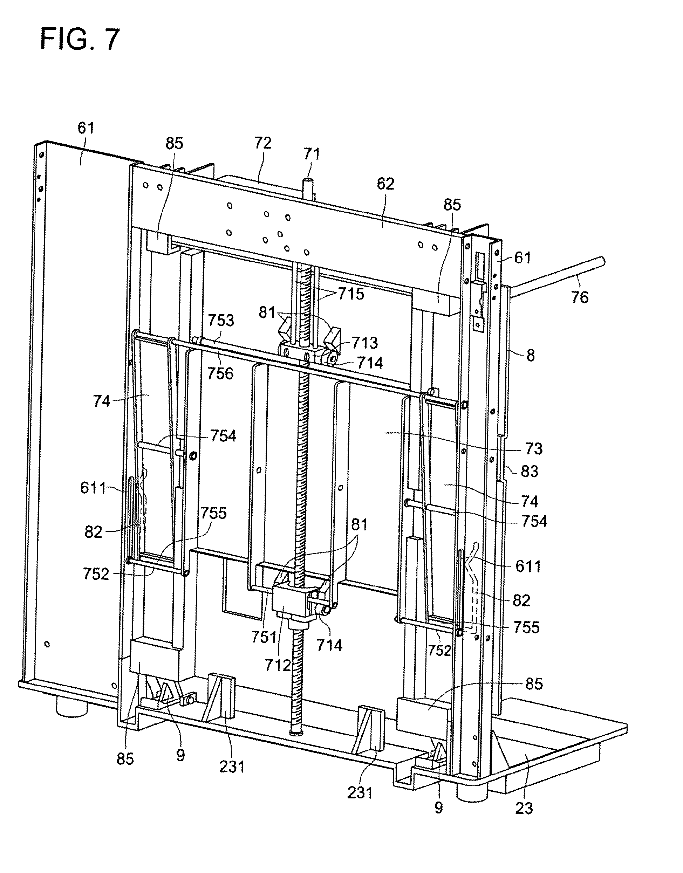

The separation mechanism is structured of supporting posts 61, beam plate 62, a moving mechanism, and moving plate 8. Fig. 6 is a perspective view of the separation mechanism, viewed from cassette 1000 side (which is viewed from the right side of Fig. 4), while Fig. 7 is a perspective view of the opposite side of Fig. 6, (which is viewed from the left side of Fig. 4). Supporting posts 61 are mounted on the left and right side on base 23 shown in Fig. 7. Beam plate 62 connects the tops of supporting posts 61. The moving mechanism is mounted within a space surrounded by base 23, supporting post 61 and beam plate 62, in which the moving mechanism shifts moving plate 8 perpendicular to its plate surface.

As shown in Figs. 6 and 7, the moving mechanism is structured of pole screw 71, drive motor 72, first link 73 and second link 74. The ends of rotatable pole screw 71 are vertically supported on base 23 and beam plate 62. Worm wheel 711 mounted on the top of pole screw 71 engages worm 721 mounted on drive motor 72. Drive motor 72, mounted on beam plate 62, rotates pole screw 71 via worm wheel 711 and worm 721.

Moving brackets 712 and 713 are structured to move vertically along pole screw 71, by the rotation of pole screw 71.

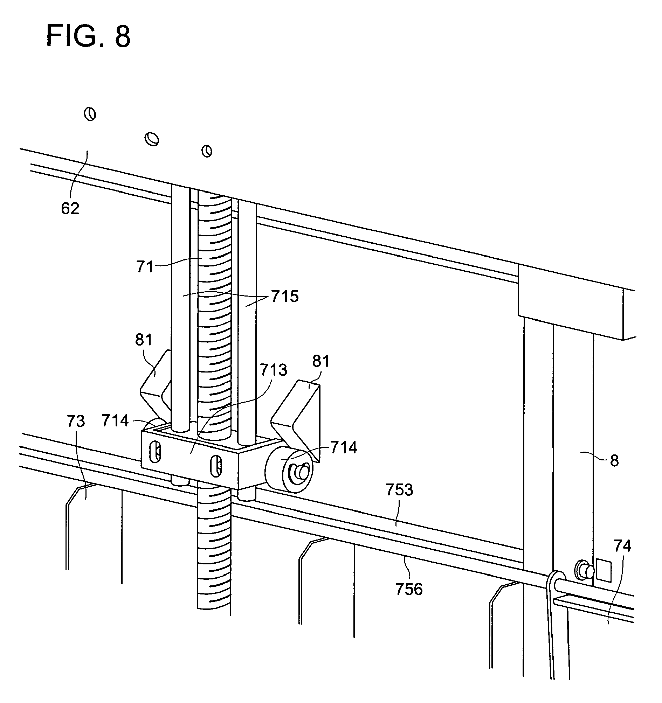

In Fig. 8, vertical shafts 715, being parallel to pole screw 71, penetrate upper moving bracket 713, so that moving brackets 712 and 713 cannot rotate with pole screw 71, but must move vertically by the rotation of pole screw 71.

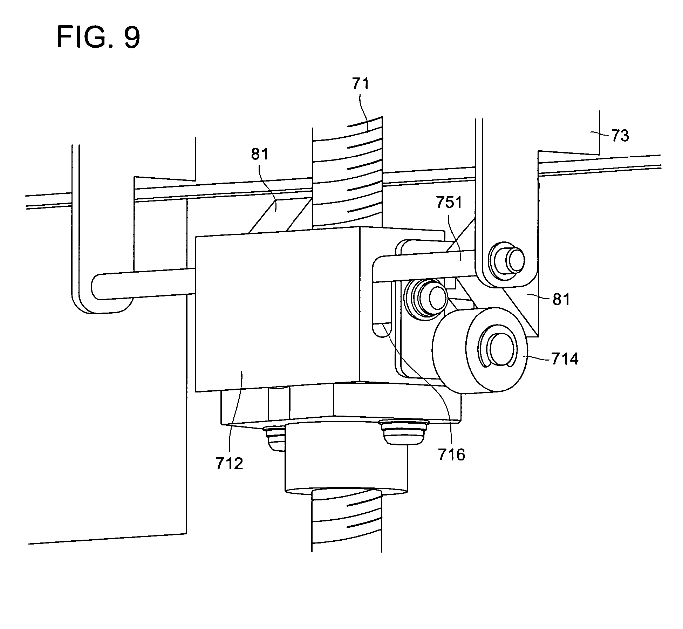

In Figs. 8 and 9, rollers 714, mounted on the both ends of moving top bracket 713, come into contact with cam 81 mounted on the back surface of moving plate 8. When moving brackets 712 and 713 go up, rollers 714 push up cam 81, whereby moving plate 8 horizontally separates from moving brackets 712 and 713. Driving of moving plate 8 by first link 73s and second links 74, which will be described later, typically requires high initial force, but since moving plate 8 is driven by rollers 714 for starting, said high initial force is not required.

In Fig. 9, lower moving bracket 712 features slot 716, through which connecting shaft 751 passes. Thereby, while rollers 714 push against cam 81, though lower moving bracket 712 goes up, lower moving bracket cannot push up first links 73.

Connecting shaft 751 is connected to moving bracket 712 at the center of the lower end of first link 73, and sliding shaft 752, at the both sides of first links 73, is mounted to slide on supporting post 61. Supporting post 61 features vertical cam hole 611, and sliding shaft 752 slides on supporting post 61 and passes through cam hole 611, whereby sliding shaft 752 can move vertically through cam hole 611.

On the upper end of first links 73, rotating shaft 753 is mounted to rotate against moving plate 8 through an elastic member, which is not illustrated. The elastic member serves as a shock absorber, when moving plate 8 attracts to or separates from back plate 1002.

At the relative middle of the apparatus, and on both sides of first links 73, connecting shaft 754 is mounted to connect second links 74 to first links 73.

Second links 74 are mounted to contact the sides of first links 73. On the lower ends of second links 74, slide shaft 755 is mounted which slides on moving plate 8. Substantially-vertical cam groove 82 shown in Fig. 4, is provided on moving plate 8 through which sliding shaft 755 slides. In addition, in Fig. 4 the top of cam groove 82 is curved to project toward supporting post 61.

Rotating shaft 756, mounted on the upper end of second links 74, slides against supporting post 61, while connecting right and left second links 74. Second links 74 move up and down on supporting post 61 against which rotating shaft 756 slides.

On the center of second links 74, with respect to the vertical height, connecting shaft 754 is horizontally inserted to connect to first links 73.

Moving plate 8 moves from left to right due to a moving apparatus in Fig. 4, while maintaining its surface vertical, and as it comes into contact with back plate 1002 of cassette 1000, moves further left to be fixed parallel to the left wall of body 2 in Fig. 4. Magnet 80 is attached to moving plate 8 to come into contact with back plate 1002. A rubber magnet can be used for magnet 80.

To remove any debris on moving image reading head 10, after-described first cleaning section 200 is mounted on magnet 80.

Clearances 83 and 84 are provided on the surface of moving plate 8 which comes into contact with back plate 1002, which are provided within working areas of pressing section 41 and the elevating plate holding section, not so as to interfere pressing section 41 and the elevating plate holding section, when moving plate 8 comes into contact with back plate 1002.

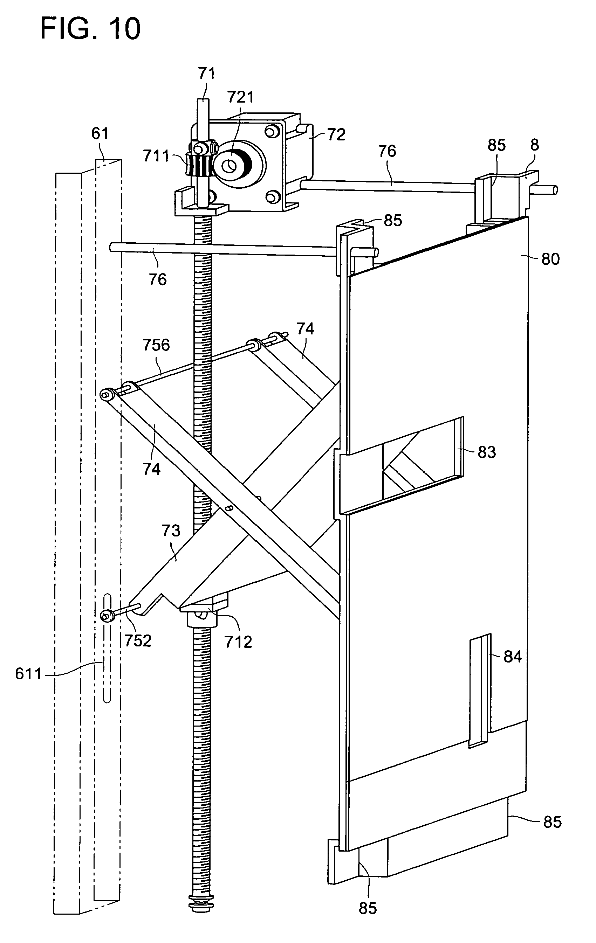

When moving brackets 712 and 713 go up, roller 714 presses cam 81 to start moving plate 8. Next, as shown in Fig. 10, the bottom of first links 73 go up, and first links 73 rotate against moving plate 8, second links 74 connected to first links 73 also rotate, whereby moving plate 8 moves toward holding plate 24. On the other hand, when moving brackets 712 and 713 go down, since first links 73 and second links 74 rotate in opposite direction to the case of going up, the bottoms of first links 73 and second links 74 go down, whereby moving plate 8 moves toward supporting poles 61.

Further, the top of moving plate 8 is placed on rail 76 which is horizontally mounted between the tops of both supporting poles and the top of holding plate 24, so that moving plate 8 moves along rail 76.

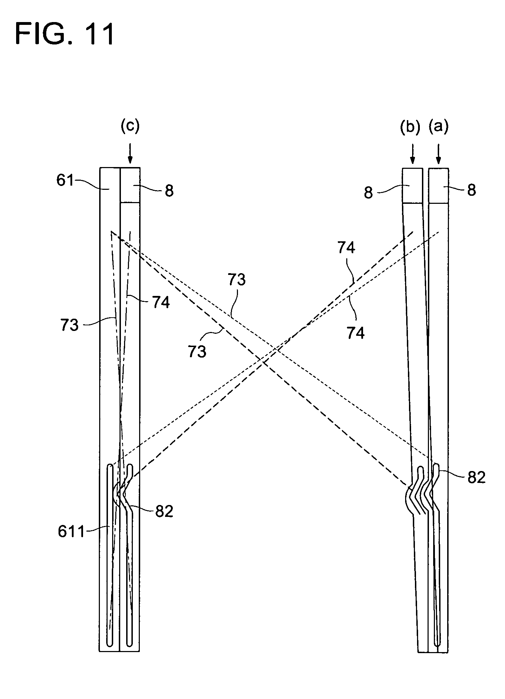

Since cam groove 82 mounted on moving plate 8 is curved to project toward supporting post 61 at its top section, when moving brackets 712 and 713 go up and sliding shaft 755 arrives at the curved section of cam groove 82, the bottom of moving plate 8 moves more forward than the top section, shown in Fig. 11. On the other hand, when moving brackets 712 and 713 go down and sliding shaft 755 arrives at the curved section of cam groove 82, the top of moving plate 8 moves more backward than the bottom section, shown in Fig. 11. The transfer position (engaged position) of back plate 1002 to moving plate 8 is shown by (a), while the separating position is shown by (b), and the reading position is shown by (c).

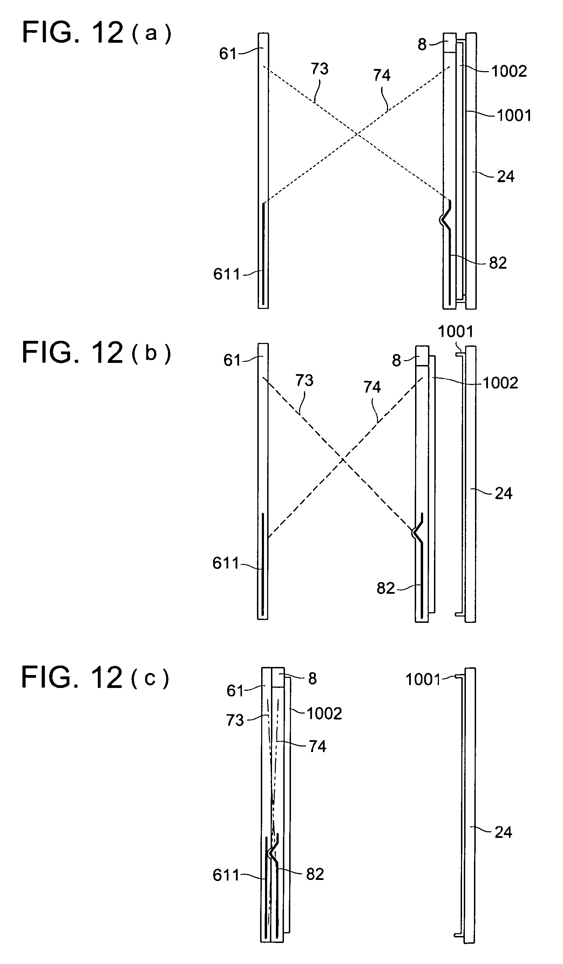

When back plate 1002 is separated from front plate 1001 by the separating mechanism, in Fig. 12(a), moving plate 8 comes into contact with back plate 1002 of cassette 1000 in the apparatus. At this time, the bottom of moving plate 8 touches in advance to back plate 1002, but an elastic member, mounted on first link 73, expands so that the whole surface of back plate 1002 can closely contact to moving plate 8.

After the locking mechanism releases cassette 1000, moving plate 8 is conveyed backward as shown in Fig. 12(b), and is ser at the reading position (which is the separating position) shown in Fig. 12(c).

In addition, in order to set moving plate 8 at the reading position, concave sections 85 are provided at the four corners of moving plate 8 as shown in Fig. 6. Further, tumblers 9 are mounted on base 23 and beam plate 62, which press concave sections 85 against supporting pole 61, to set moving plate 8.

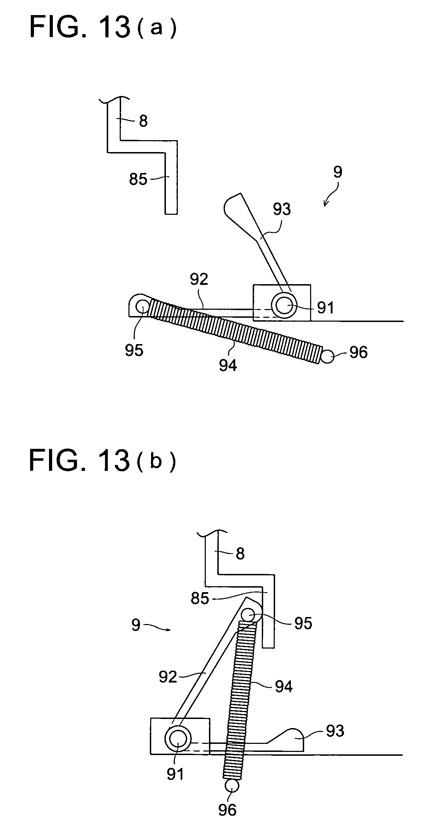

Tumbler mechanism 9, shown in Figs. 13 - 15, is structured of rotating shaft 91 mounted on base 23 and beam plate 62, first lever 92 whose end is connected to rotating shaft 91, second lever 93 whose end is connected to rotating shaft 91 being at a sharp angle to first lever 92, and tumbler spring 94. Tumbler mechanism 9, mounted on base 23, is also mounted on beam plate 62 upside down, but almost the same way.

Tumbler spring 94 connects first spring fixing section 95, mounted on first lever 92, with second spring fixing section, mounted on base 23 (or beam plate 62), it expands and contracts to reduce the distance between first spring fixing section 95 and second spring fixing section 96. For example, as shown in Fig. 13(a), when first spring fixing section 95 is positioned lower than a line joining second spring fixing section 96 and rotating shaft 91, first lever 92 is forced downward, whereby the distance between first spring fixing section 95 and second spring fixing section 96 is shortest. On the other hand, as shown in Fig. 13(b), when first spring fixing section 95 is positioned higher than a line joining second spring fixing section 96 and rotating shaft 91, first lever 92 is forced upward, whereby distance between first spring fixing section 95 and second spring fixing section 96 is shortest. Since tumbler spring 94 shown in Fig. 13(a) is more expanded than in Fig. 13(b), the former has greater elastic force.

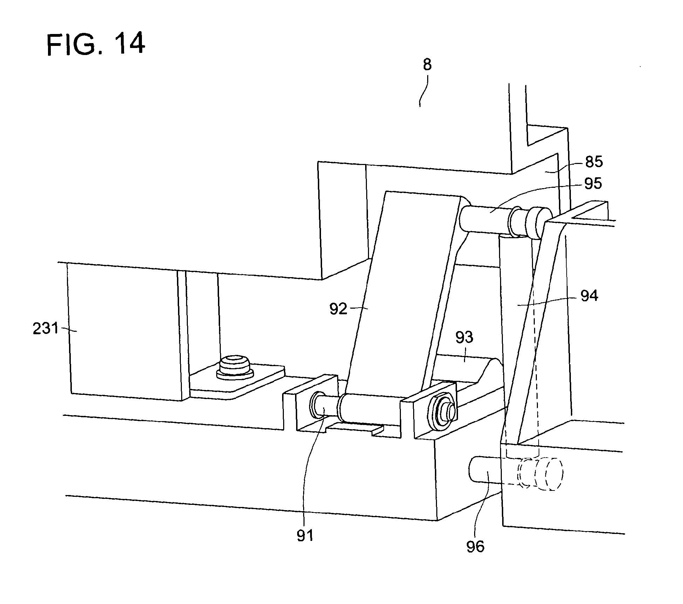

To set moving plate 8 at the reading position, moving plate 8 moves from left to right in Fig. 13(a). The bottom of moving plate 8 touches second lever 93, and moves farther right, so that tumbler 9 rotates clockwise. When first spring fixing section 95 rotates to a position higher than the line joining second spring fixing section 96 and rotating shaft 91, tumbler spring 94 contracts, and which rotates tumbler 9 by releasing accumulated spring force. As shown in Fig. 13(b), first lever 92 presses moving plate 8 in the right direction, whereby moving plate 8 is in a set condition, which is shown in Fig. 14. At this time, moving plate 8 is set to position regulating block 231 mounted on base 23. In addition, since lower moving bracket 712 receives force from first link 73 through connecting shaft 751 which penetrates slot 716, when tumbler 9 pushes moving plate 8, no load is applied on lower moving bracket 712 and pole screw 71.

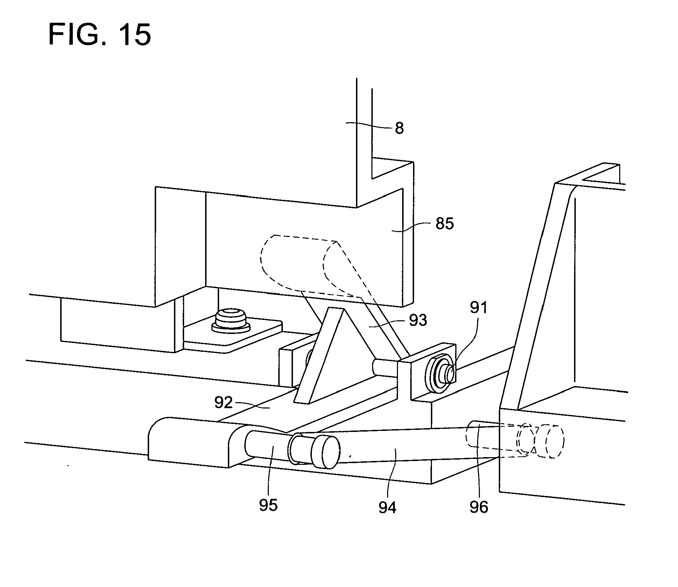

When moving plate 8 is conveyed from the reading position to the transfer position, moving plate 8 is moved toward the left direction from the condition shown in Fig. 13(b), and tumbler 9 rotates counterclockwise. When first spring setting section 95 rotates to be lower than the line joining second spring setting section 96 and rotating shaft 91, tumbler spring 94 contracts and tumbler 9 rotates, whereby moving plate 8 is released as shown in Fig. 13(a) and Fig. 15. In this case, tumbler spring 94 accumulates elastic force, in a standby condition, waiting the next repositioning of moving plate 8.

Linear motor 11 for driving image reading head 10 is structured of stationary part 111 mounted parallel to cassette 1000 (in the depth direction of Fig. 4), and movable part 112 mounted under conveyance plate 101 which conveys image reading head 10, shown in Fig. 6. Stationary part 111 is formed of a pipe including plural magnets, aligned at opposite polarities, and stationary part 111 passes through the center of movable part 112.

Electrical coils are housed in movable part 112. Concerning the coils, plural phase, such as three phase, can be used, but is not limited to such. Movable part 112 includes a hole to allow stationary part 111 to pass through. When electrical current is applied to the coils, movable part 112 generates magnetic force to repel the magnets stored in stationary part 111, so that stationary part 111 moves in an axial direction of stationary part 111.

Image reading head 10 moves between moving plate 8 holding back plate 1002 and is fixed in the reading position (being the separating position), and holding plate 24 holding front plate 1001. Image reading head 10 is structured of a laser ray radiating device which radiates laser rays onto the stimulable phosphor sheet while scanning laser rays in the direction perpendicular to the moving direction of image reading head 10, and an image reading section which is formed of a light guide plate which guides the stimulated light excited by the laser rays radiated on the stimulable phosphor sheet by the laser radiating device, a light condenser tube which condenses the stimulated light guided by the light guide plate, and a photo-electro converter which converts the stimulated light condensed by the condenser tube to electrical signals.
A photo-multiplier and CCD (being a charge-coupled device) can be used as the photo-electro converter.

Further, an erasing section is provided in image reading head 10, which radiates light to allow radiation energy remaining in the stimulable phosphr sheet to be discharged, after radiation energy is read. Accordingly, image reading head 10 can read radiation image information from the stimulable phosphor sheet on its outward travel, and on its return travel, which allows any remaining radiation energy to be discharged from the stimulable phosphor sheet.

After radiation image information is read, and any remaining radiation energy is discharged by image reading head 10, the stimulable phosphor sheet and back plate 1002 are attached to front plate 1001, while the separating mechanism is driven in the order of (c), (b), and (a) in Fig. 12. Then the locking mechanism engages front plate 1001 to back plate 1002, resulting in the engaged condition. Further, moving plate 8 is returned to supporting pole 61, so that moving plate 8 is separated from back plate 1002. In this case, as shown in Fig. 11, the upper section of moving plate 8 is firstly separated, so that moving plate 8 can be easily separated from back plate 1002, without difficulty.

After the reading operation is completed, cassette 1000 is ejected from the apparatus. That is, firstly, width adjusting motor 43 is activated and pressing section 41 opens a width adjust section. Shutter motor 27 is activated to open shutter unit 26. Shutter motor 27 is deactivated when complete opening of shutter unit 26 is detected.

When shutter unit 26 is completely open, elevating motor 33 is activated to raise elevating plate 31 to the ejection position of cassette 1000. Elevating motor 33 is deactivated when elevating plate 31 arrives at the ejection position.

The user pulls up cassette 1000 at the ejection position, then shutter motor 27 is activated to close shutter unit 26. Shutter motor 27 is deactivated when complete closure of shutter unit 26 is detected.

As described above, in the radiation image reading apparatus of the present embodiment, after cassette 1000 is separated into front plate 1001 and back plate 1002, back plate 1002 is moved while its surface is supported vertically, after which image reading head 10 is driven for the sub-scanning operation between front plate 1001 and back plate 1002, both separated in parallel. Then stimulable phosphor sheet is scanned by image reading head 10 as the main scanning operation, and accordingly, the space for separating cassette 1000 is combined with the space for scanning the sheet, which are commonly used, which results in downsizing of the apparatus. Therefore, the spaces for installing the apparatus and inserting the cassette can be reduced, and thereby a downsized apparatus can be installed near a doctor's desk.

Further, cassette inlet 21 is positioned at the top of the apparatus, and when cassette 1000 is read, it is completely inserted into the apparatus, and after reading, cassette 1000 is ejected, therefore when the user goes away from the apparatus after he/she sets the cassette, and when he/she returns to the apparatus, if the cassette is ejected on cassette inlet 21 at the top of the apparatus, he/she can assume that his/her cassette has been already read.

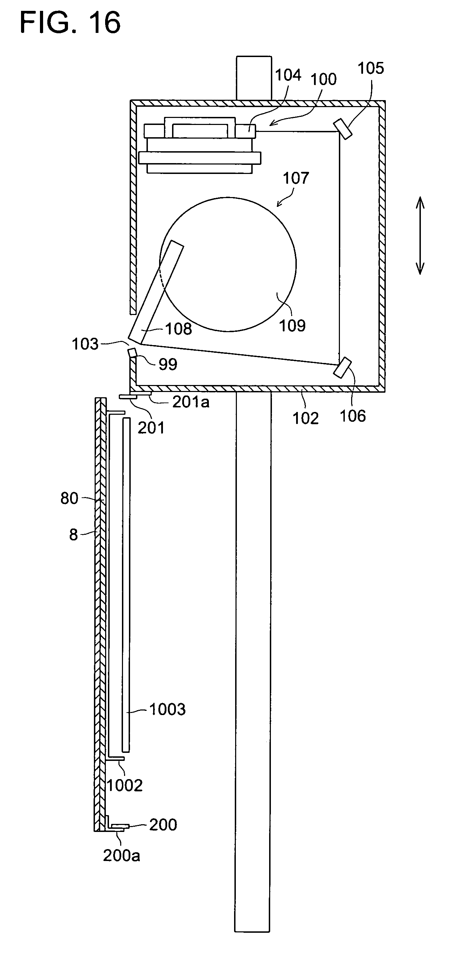

In Figs. 4 and 5, scanning type image reading head 10 (which is an image reading section) is arranged between support pole 61 and elevating plate 31. Next, while referring to Fig. 16, image reading head 10 (which is an image reading section) will now be detailed.

Image reading head 10 has cuboid case 102. Its longer sides are vertical, and the back of case 102 is substantially parallel to moving plate 8 (being the holding section) which is at the rear of case 102. Linear motor 11 is connected to the bottom of case 102, being outside of case 102. Case 102 is reciprocated right and left by linear motor 11.

Fig. 16 is a top view of image reading head 10, in which case 102 is cut by the horizontal surface. Further, Fig. 16 shows the standby position of image reading head 10. Slit 103 is vertically provided, through which laser rays, emitted from scanning type excitation light radiating mechanism 100, are radiated out of case 102.

Scanning type excitation light radiating mechanism 100 is installed within case 102. Scanning type excitation light radiating mechanism 100 includes a laser diode which emits excitation rays with wave length to stimulate stimulable phosphor sheet 1003, a collimator lens which collects the laser rays emitted from the laser diode, polygonal mirror 104 which reflects the laser rays from collimator lens by plural mirrors, reflection mirror 105 which reflects the laser rays reflected by polygonal mirror 104, and a reflection lens which reflects the laser rays reflected by mirror 105 toward slit 103 and converges the laser rays through the length of slit 103.

Polygonal mirror 104 is rotated by a motor mechanism, and an exposed section of the laser rays changes from the bottom to the top, and vise versa. When stimulable phosphor sheet 1003 is behind case 102, it is scanned by the laser rays. The scanning direction of the laser rays is perpendicular to the moving direction of case 102. In this way, the positions of mirror 105, polygonal mirror 104, reflection lens 106, and slit 103 can be changed to other positioning order.

Further, light detector 107 is installed in case 102, which receives the stimulated light radiated from stimulable phosphor sheet 1003 within a reading range of scanning type excitation light radiating mechanism 100, which converts said received light to electrical signals. Light detector 107 includes light guide 108, light condenser tube 109 and a light receiving sensor. One end of light guide 108 projects from case 102 through slit 103 and the other end is connected to light condenser tube 109, therefore the stimulated light radiated from stimulable phosphor sheet 1003 enters the end of light guide 108, and is guided to the other end through light guide 108, and enters light condenser tube 109. Light condenser tube 109 controls light which enters from various positions in the vertical direction, to be condensed and guided to the light receiving sensor. The light receiving sensor is a photo-electro conversion device, such as a photo-multiplier, a photo-diode, and a photo-transistor.

Since the stimulated light is diverged from stimulable phosphor sheet, reflector 99, provided on the left side of slit 103 out of case 102, reflects said stimulated light and guides it to the other end of light guide 108.

Still further, an erasing light radiating section is provided in case 102, which radiates erasing light of a predetermined wave length, but which is not illustrated.

Still further, second cleaning means 201 is mounted on the left back side of case 102, which touches to clean the front surface of stimulable phosphor sheet 1003 which receives debris while image reading head 10 moves. First and second cleaning means 200 and 201 will now be detailed.

First cleaning means 200 is arranged vertically on the left side of and in front of magnet 80 adhered to moving plate 8, and projects toward image reading head 10. That is, first cleaning means 200 is mounted at a left position of back plate 1002 which is attracted by magnet 80, and is positioned outside the reading range of stimulable phosphor sheet 1003. Accordingly, image reading head 10 moves horizontally far to the left of the reading range to outside the reading range of stimulable phosphor sheet 1003, and moves until slit 103 of case 102 comes to a position where slit 103 faces first cleaning means 200, whereby first cleaning means 200 slightly touches and cleans sections of slit 103, such as light guide 108, and reflection mirror 99.

For first cleaning means 200, it is possible to use a brush, a piece of woven fabric, a piece of non-woven fabric, a rubber blade, as well as other appropriate elastic members. In particular, a soft member having electrical discharging function is preferable, which cleans the surface of stimulable phosphor sheet 1003 and prevents it from retaining a static charge. The soft cloth cleans without damaging the surface which first cleaning means 200 touches. First cleaning means 200, viewed from the top, is mounted on a side of L-shaped supporting member 200a which is fixed in front of magnet 80, and since first cleaning means 200 is mounted by screws or double-sided adhesive tape, it is exchangeable when a large amount of debris has been adhered.

Second cleaning means 201 is arranged vertically on the left side of the back surface of case 102, and projects toward stimulable phosphor sheet 1003. Accordingly when image reading head 10 moves horizontally within the reading range of stimulable phosphor sheet 1003, second cleaning means 201 slightly touches the front surface of stimulable phosphor sheet 1003 and thereby cleans it, before slit 103 and light guide 108 move closer to the surface of stimulable phosphor sheet 1003.

For second cleaning means 201, it is also possible to use a brush, a piece of woven fabric, a piece of non-woven fabric, a rubber blade, and other appropriate elastic members, being the same as first cleaning means 200. In particular, a soft member having electrical discharging function is preferable. Second cleaning means 201, viewed from the top, is mounted on supporting member 201a set on the left side of the back surface of case 102, by exchangeable screws or double-sided adhesive tape.

When moving plate 8 has reached its home position, stimulable phosphor sheet 1003 is exposed while facing the front direction, and image reading head 10 moves horizontally from right to left in front of the reading range of stimulable phosphor sheet 1003. In detail, in Fig. 16, image reading head 10 starts toward the left direction from its home position where second cleaning means 201 mounted on image reading head 10 faces the right end of back plate 1002, and image reading head 10 stops at a position where second cleaning means 201 faces the left end of back plate 1002. During the above travel of image reading head 10, second cleaning means 201 slightly touches the front surface of stimulable phosphor sheet 1003 and cleans it, before slit 103 and light guide 108 are moved closer to the surface of stimulable phosphor sheet 1003.

Further, while image reading head 10 moves left, stimulable phosphor sheet 1003 is vertically scanned by the laser rays emitted by scanning type excitation light radiating mechanism 100. When the laser rays enter stimulable phosphor sheet 1003, the stimulated light, the light amount or intensity of which is proportional to the radiation energy accumulated in stimulable phosphor sheet 1003, is generated, and which enters light guide 108 of light detector 107, and is then photo-electrically converted to electrical signals. That is, while image reading head 10 moves left, any point having been radiated by scanning type excitation light radiating mechanism 100 moves vertically, and the stimulated light emitted from the radiated point is sequentially converted to the electrical signals, whereby the intensity distribution of the stimulated light from the surface of stimulable phosphor sheet 1003 is obtained as image data, and the radiation image recorded in stimulable phosphor sheet 1003 becomes image data. Further, the obtained image data is outputted into an image memory apparatus, an image display apparatus or an image output apparatus.

When image reading head 10 is cleaned, image reading head 10 widely moves from right to left, outside the reading range of stimulable phosphor sheet 1003. Specifically, second cleaning means 201 moves beyond the left end of back plate 1002, until it reaches a position where slit 103 of case 102 faces first cleaning means 200. When image reading head 10 moves as far left as described above, first cleaning means 200 slightly touches and cleans portions of slit 103, such as light guide 108 and reflection mirror 99.

In addition, reading operation conducted by image reading head 10 and cleaning operations conducted by first cleaning means 200 are controlled by a controller (being a control means) which controls total radiation image reading apparatus 1. In detail, when the controller conducts the reading operation of image information which is stored in stimulable phosphor sheet 1003, the controller controls image reading head 10 to move into inside the reading range as described above, and when the controller conducts the cleaning operation of image reading head 10, the controller controls image reading head 10 to move far to the left and outside the reading range.

When image reading head 10 reaches the left side of stimulable phosphor sheet 1003, image reading head 10 moves to the right side home position, while an erasing light emitting mechanism is lit. Accordingly, erasing light enters stimulable phosphor sheet 1003, and any radiation energy remaining in stimulable phosphor sheet 1003 is cleared by the erasing light.

When image reading head 10 reaches its home position, moving plate 8 moves forward, while moving plate 8 is substantially parallel to the back surface of body 2. After moving plate 8 has moved forward and back plate 1002 has engaged to front plate 1001, a lock releasing mechanism engages the engaging section of cassette 1000. Next, moving plate 8 moves backward, so that magnet 80 is separated from back plate 1002.

As detailed above, first cleaning means 200 is mounted on moving plate 8, and outside the reading range of stimulable phosphor sheet 1003 (it is mounted on the left side of moving plate 8), and the relative displacement of image reading head 10 is conducted against stimulable phosphor sheet 1003, whereby first cleaning means 200 touches to clean image reading head 10. Accordingly, the obtained images are satisfactory. Further, since first cleaning means 200 cleans image reading head 10 by such a simple method, it is beneficial in the manufacturing process and production cost.

Further, by the control conducted by the controller, when stimulable phosphor sheet 1003 is read, image reading head 10 is moved to be positioned inside the reading range, and when first cleaning means 200 conducts the cleaning operation, image reading means 10 is moved to contact first cleaning means 200 which is outside the reading range. First cleaning means 200 does not conduct the cleaning operation after each reading operation, but conducts arbitrarily. Accordingly, any debris attached on first cleaning means 200, is prevented from being again attached to the image reading section or the other sections.

Still further, second cleaning means 201 is mounted on image reading means 10, and the relative displacement of image reading head 10 is conducted against stimulable phosphor sheet 1003, so that second cleaning means 201 mounted on image reading means 10 contacts and cleans stimulable phosphor sheet 1003. Accordingly, the obtained images become satisfactory. Second cleaning means 201 cleans stimulable phosphor sheet 1003 by such a simple method, which is beneficial in the manufacturing process and production cost.

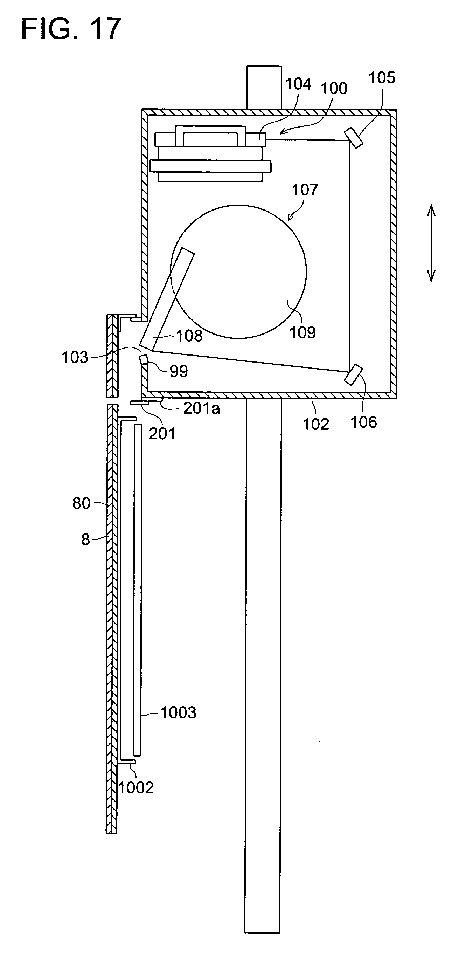

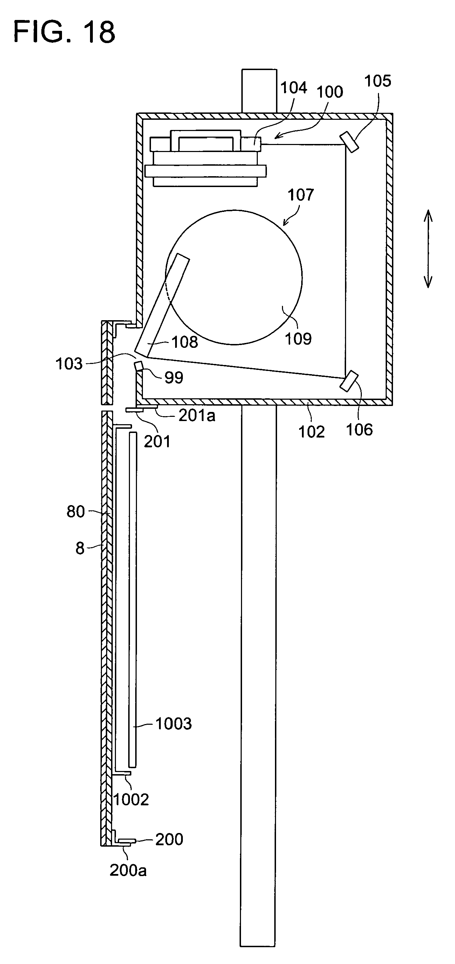

A variation pattern will be detailed while referring to Figs. 17 and 18.

Figs. 17 and 18 are the top views of image reading head 10, which show nearly the same way as Fig. 16. Figs. 17 and 18 show the condition before image reading head 10 moves.

In Fig. 17, first cleaning means 200 is vertically arranged on the right side of and in front of magnet 80 adhered to moving plate 8, and projects toward image reading head 10. That is, first cleaning means 200 is mounted at the right position of back plate 1002 which is attracted by magnet 80, and is positioned outside the reading range of stimulable phosphor sheet 1003. Accordingly, image reading head 10 moves horizontally far to the right from inside the reading range to outside the reading range of stimulable phosphor sheet 1003, and further moves until slit 103 of case 102 comes to a position where slit 103 faces first cleaning means 200, whereby first cleaning means 200 slightly touches and cleans sections of slit 103, such as light guide 108, and reflection mirror 99.

The cleaning operation conducted by first cleaning means 200 is also controlled by the above-described controller to move far in the right direction.

In Fig. 18, first cleaning means 200 is mounted on the left end of magnet 80 in the same way as Fig. 16, and second cleaning means 201 is mounted on the right end of magnet 80 in the same way as Fig. 17, since the construction is the same as in the case of Fig. 16, its explanation is abbreviated.

Accordingly image reading head 10 is cleaned by movement toward the left of image reading head 10 beyond the reading range, and is also cleaned by movement toward the right. Other than that, the cleaning operation by first cleaning means 200 can be conducted by either one of the above movements, or both movements as appropriate. Such cleaning operation is controlled by the controller.

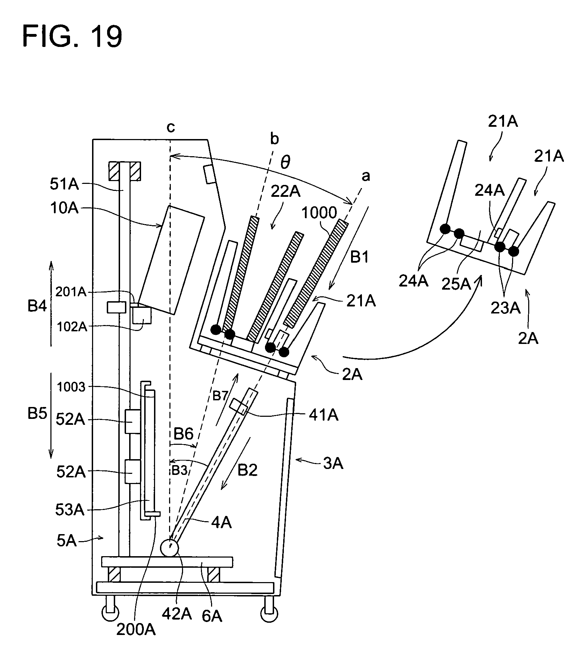

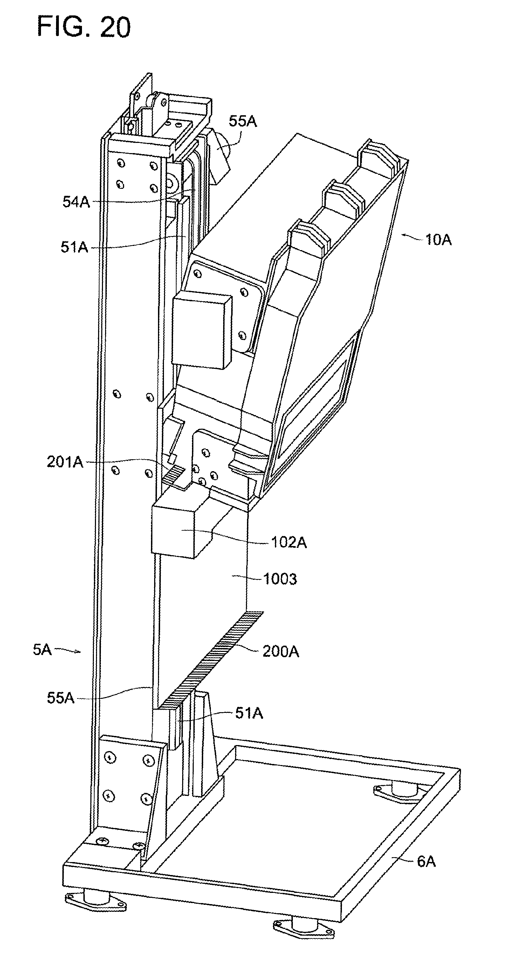

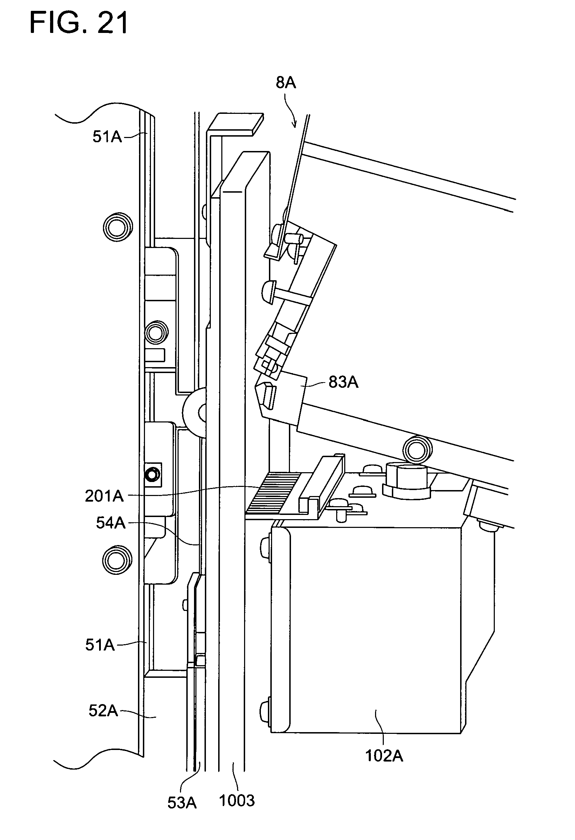

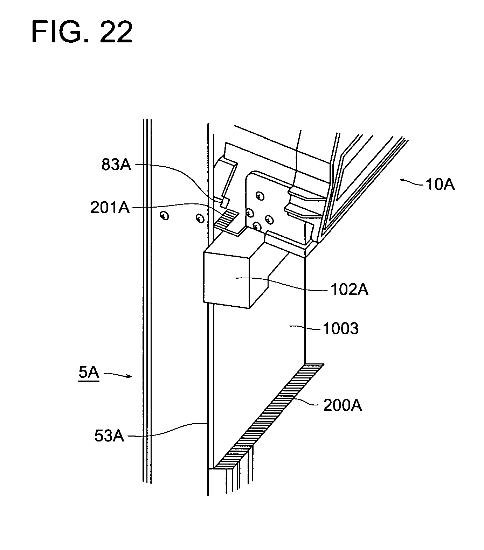

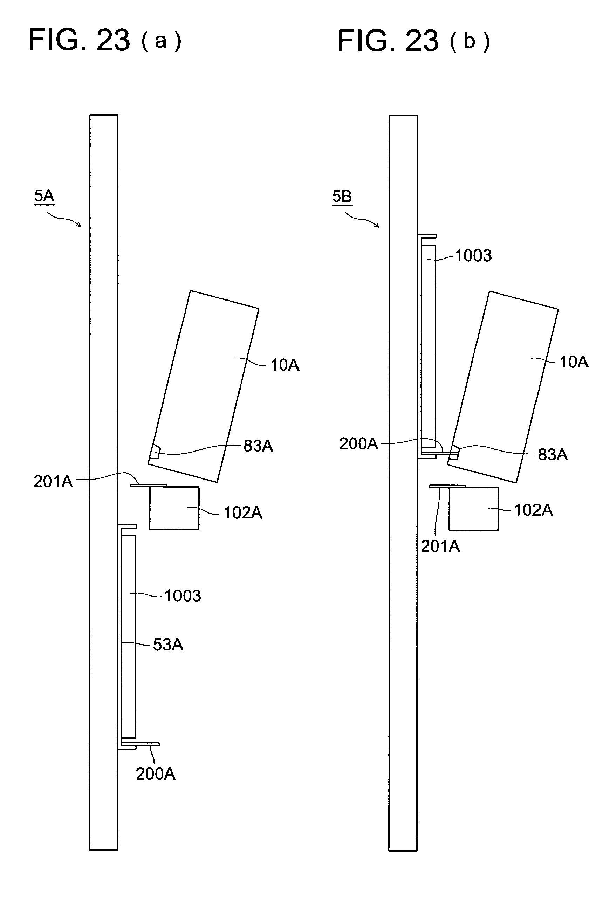

Fig. 19 is a schematic view showing the total structure of another radiation image reading apparatus, Fig. 20 is a perspective view showing the front, top and left side of conveyance section 5A, and conveyance mechanism of image reading head 10A and stimulable phosphor sheet 1003, Fig. 21 shows the relevant parts of contacting portions of second cleaning means 201A and stimulable phosphor sheet 1003 in Fig. 20, and Fig. 22 shows relevant parts of the lower section of stimulable phosphor sheet 1003 in Fig. 20. In Figs. 19-22, and aftermentioned Fig. 23, the magnet and the back plate are not illustrated.

These figures show a case in which image information accumulated in stimulable phosphor sheet 1003 is read, when stimulable phosphor sheet 1003 moves vertically in front of image reading head 10.

The structure of this radiation image reading apparatus will now be detailed. In Fig. 19, radiation image reading apparatus 1A includes cassette holding section 2A having loading slot 21A and ejecting slot 22A for cassette 1000, and conveyance/reading section 3A which places cassette 1000 inserted through cassette holding section 2A at a predetermined position to read image information. Cassette holding section 2A is detachably mounted on conveyance/reading section 3A.

Conveyance/reading section 3A includes turning/conveyance section 4A which receives cassette 1000 from loading slot 21A, and holds it to be turned, and further conveys it to after-mentioned conveyance section 5A, conveyance section 5A which vertically moves cassette 1000 conveyed by turning/conveyance section 4A, and reading head 10 which reads image information accumulated in stimulable phosphor sheet 1003.

Both turning/conveyance section 4A and conveyance section 5A are mounted on base 6A.

Bar-code reader 24A is mounted within loading slot 21A, which reads the bar-code of inserted cassette 1000. In the vicinity of loading slot 21A, paired insertion rollers 23A are mounted, which hold cassette 1000 inserted through loading slot 21A and insert it into the interior of conveyance reading section 3A.

In the vicinity of ejecting slot 22A, paired ejection rollers 24A are mounted to eject cassette 1000, which accommodate stimulable phosphor sheet 1000 from which image information has been read, outside the apparatus. Further, on ejecting slot 22A, stocker 25A is provided which accommodates plural ejected cassettes 1000, being 2 - 5 cassettes.

Turning/conveyance section 4A functions to receive and hold cassette 1000 inserted into the inside of conveyance/reading section 3A, and functions to convey cassette 1000 to conveyance section 5A. Turning/conveyance section 4A has elevating plate 41A which receives to hold cassette 1000 inserted into the inside of conveyance/reading section 3A. Further, turning/conveyance section 4A can rotate on rotating shaft 42A at least within the range from dashed line "a" to dashed line "c", (which is within angle θ).

Conveyance section 5A, structured of conveyance rail 51A, moving section 52A, holding section 53A, a magnet, and first cleaning means 200A, holds and conveys cassette 1000 in the vertical direction (which is the sub-scanning direction).

As shown in Figs. 20 and 21, conveyance belt 54A, connected to holding plate 53A is driven by drive motor 55A through a pulley. Accordingly when conveyance belt is driven by drive motor 55A, holding plate 53A and cassette 1000 are moved in the vertical direction, and moving section 52A simultaneously also moves conveyance rail 51A in the vertical direction.

Image reading head 10A has cuboid case 82A, and a longer side of case 82A is horizontal. Slit 83A, being long, is horizontally formed on the back surface of case 82A. A scanning type excitation light radiating mechanism and a light detector are mounted in case 82A, and erasing light radiating mechanism 102A is also mounted in a lower position in case 82A. Further, image reading head 10A is mounted in conveyance/reading section 3A.

Figs. 23 are side views of image reading head 10A,
wherein the condition before stimulable phosphor sheet 1003 is moved is shown in (a), while in (b), the condition after stimulable phosphor sheet 1003 has moved upward, and slit 83A is cleaned by first cleaning means 200A.

First cleaning means 200A is arranged in the horizontal direction in front of a magnet adhered to holding plate 53A, and projects toward image reading head 10A. That is, first cleaning means 200A is mounted lower than stimulable phosphor sheet 1003 which is attracted by the magnet, and is positioned outside the reading range of stimulable phosphor sheet 1003. Accordingly, as shown in Fig. 23(b), stimulable phosphor sheet 1003 largely moves upward from inside the reading range to outside the reading range of stimulable phosphor sheet 1003, and slit 83A formed on case 82A moves to a position where slit 83A faces first cleaning means 200A, whereby first cleaning means 200A softly touches and cleans sections of slit 83A, such as a light guide.

Second cleaning means 201A is horizontally arranged on the top surface of erasing light radiating mechanism 102A, and projects toward stimulable phosphor sheet 1003. Accordingly when stimulable phosphor sheet 1003 moves vertically within the reading range of stimulable phosphor sheet 1003, that is, when stimulable phosphor sheet 1003 moves from Fig. 23(a) to Fig. 23(b), second cleaning means 201A gently touches the surface of stimulable phosphor sheet 1003 and cleans it, before stimulable phosphor sheet 1003 is read.

Materials of first and second cleaning means 200A and 201A are the same as those of first and second cleaning means 200 and 201.

Next, the using method and the operation of the radiation image reading apparatus will be detailed.

Firstly, while the user allows the front plate of cassette 1000 to face downward, cassette 1000 is inserted into loading slot 21A at an angle, shown by arrow B1. After the insertion, the bar code, mounted on the back surface of front plate, is read by bar code reader 24A.

After cassette 1000, inserted in the above manner, is inserted to the inside of conveyance/reading section 3A by paired insertion rollers 23A, cassette 1000 is placed on elevating plate 31A of turning/conveyance section 4A. After which turning/conveyance section 4A rotates around rotation shaft 42A in the direction shown by arrow B3, which is from dashed line "a" to dashed line "c", whereby the magnet of conveyance section 5A comes into contact with the back plate of cassette 1000, and the back plate is adhered to the magnet.

Next, by the lock releasing mechanism accommodated in elevating plate 31A, the engaging section of cassette 1000 is released, and the front plate and the back plate become separable from each other. Turning/conveyance section 4A rotates in the direction shown by arrow B3, and stops at a corresponding position (which is a position shown by dashed line "b"). By this operation, the back plate is separated from the front plate.

After the back plate has been separated from the front plate, holding plate 53A and the back plate are conveyed upward (which is shown by arrow B4) by drive motor 55A. In detail, as shown in Fig. 23(a), stimulable phosphor sheet 1003 is conveyed up in such a manner that the top of stimulable phosphor sheet 1003 starts from a position (being the home position) which is lower than the bottom of erasing light radiating mechanism 102A, and stimulable phosphor sheet 1003 stops at a position (which is not illustrated) where the bottom of stimulable phosphor sheet 1003 faces slit 83A and the light guide of case 82A. Further, while stimulable phosphor sheet 1003 goes up, second cleaning means 201A softly touches the surface of stimulable phosphor sheet 1003 and thereby cleans it, before stimulable phosphor sheet 1003 is read.

Still further, while stimulable phosphor sheet 1003 goes up, stimulable phosphor sheet 1000 is reciprocally scanned in the right and left direction by the laser rays emitted from the scanning type excitation light radiating mechanism, and stimulated light is received and photo/electrically converted by the light detector, whereby the radiation image recorded in stimulable phosphor sheet becomes image data.

Still further, to clean image reading head 10A, stimulable phosphor sheet 1003 goes up so as to allow slit 83A of case 82A to a position on outside reading range, as shown in Fig. 23(a). In detail, stimulable phosphor sheet 1003 goes up in such a manner that the bottom of stimulable phosphor sheet 1003 goes up far from a position facing slit 83A of case 82A, and stimulable phosphor sheet 1003 stops at a position where slit 83A of case 82A faces first cleaning means 200A. Further, while stimulable phosphor sheet 1003 goes up, second cleaning means 201A softly touches the section of slit 83A, which is mainly the light guide, and thereby cleans it.

In addition, the reading operation conducted by image reading head 10A and cleaning operation conducted by first cleaning means 200A are controlled by a controller (being a control means) which controls total radiation image reading apparatus 1A. In detail, when the controller conducts the reading operation of image information which is stored in stimulable phosphor sheet 1003, the controller moves stimulable phosphor sheet 1003 in such a way that slit 83A is positioned inside the reading range, and when the controller conducts the cleaning operation of image reading head 10A, the controller moves stimulable phosphor sheet 1003 upward in such a way that slit 83A is positioned outside the reading range.

When stimulable phosphor sheet 1003 has been moved upward, and reading is completed to its bottom section, stimulable phosphor sheet 1003 moves downward to the home position in the lower direction (in direction of arrow B5), while an erasing light emitting mechanism 102A is lit. Accordingly, erasing light is exposed onto stimulable phosphor sheet 1003, and any radiation energy remaining in stimulable phosphor sheet 1003 is cleared by erasing light.

When stimulable phosphor sheet 1003 reaches its home position, turning/conveyance section 4A, which was displaced at a evacuating position, again rotates to the position of dashed line "c" in the direction shown by arrow B3, where the back plate is engaged to the front plate, and the lock releasing mechanism engages the engaging section of cassette 1000.

Turning/conveyance section 4A rotates in the direction shown by arrow B6, and stops at the position shown by dashed line "b". By this operation, the reverse surface of back plate, attracted by the magnet of conveyance section 5A, is separated from the magnet by the rotating operation of turning/conveyance section 4A.

Next, elevating plate 31A moves to its home position, and cassette 1000 is sent toward ejecting slot 22A in the direction of arrow B7, cassette 1000 then contacts paired ejection rollers 24A. By paired ejection rollers 24A, cassette 1000 is ejected to ejecting slot 22A. When cassette 1000 completely appears on ejecting slot 22A, the user takes off cassette 1000 from ejecting slot 22A.

Based on the above-described embodiment, in holding plate 53A, first cleaning means 200A is mounted outside the reading range (that is, at the lower end of holding plate 53A) of stimulable phosphor sheet 1000, and when stimulable phosphor sheet 1000 is moved against image reading head 10A, first cleaning means 200A touches the section of slit 83A, and thereby cleans it. Accordingly, the obtained images become satisfactory. Since first cleaning means 200A cleans image reading head 10A by such a simple method, it is beneficial in the manufacturing process and the production cost.

Further, by the control conducted by the controller, when stimulable phosphor sheet 1003 is to be read, stimulable phosphor sheet 1003 is moved in such manner that image reading head 10A is positioned inside the reading range, and when first cleaning means 200A conducts the cleaning operation, stimulable phosphor sheet 1003 is moved in such a manner that image reading means 10 contacts first cleaning means 200 which is outside the reading range, accordingly, first cleaning means 200 does not conduct the cleaning operation by each reading operation, but conducts arbitrarily. Accordingly, any debris attached on first cleaning means 200 is prevented from again being attached onto the image reading head 10A or onto other sections.

Still further, second cleaning means 201A is mounted on image reading means 10A, and stimulable phosphor sheet 1003 is relatively displaced against image reading head 10A, whereby second cleaning means 201 mounted on image reading means 10A touches stimulable phosphor sheet 1003 and thereby cleans it. Accordingly, the obtained images become satisfactory. Second cleaning means 201A cleans stimulable phosphor sheet 1003 by such a simple method, it is beneficial in the manufacturing process and the production cost.

As a variation pattern, first cleaning means 200A can also be mounted on the front surface and the top section of the magnet, to project toward image reading head 10A, which is not illustrated. In such case, image reading head 10A is cleaned when stimulabple phosphor sheet 1003 is moved downward in such a manner that first cleaning means 200A touches image reading head 10A.

Further, first cleaning means 200A can be mounted on both the top section and the bottom section of the magnet. In this case, image reading head 10A is cleaned when stimulable phosphor sheet 1003 is move upward as well as it is moved downward. The cleaning operation by first cleaning means 200A can be conducted through either one of the above movements, or both movements but arbitrarily. Such cleaning operation is controlled by the controller.

## Claims

1. A radiation image reading apparatus which reads out radiation image information from a stimulable phosphor sheet enclosed in a cassette in which a back plate attached to the stimulable phosphor sheet and a front plate to cover the stimulable phosphor sheet are engaged,
wherein the radiation image reading apparatus is **characterized in that** the radiation image reading apparatus includes:
a front plate holding means which holds the front plate,
a back plate holding means which holds the back plate, and
a conveyance means which conveys at least either one of the front plate holding means or the back plate holding means, between an engaging position where the front plate and the back plate are engaged as the cassette and a separating position where the front plate and the back plate are separated to be parallel to each other,
wherein the conveyance means includes:
a first link whose upper end is pivotably attached to the holding means to be conveyed, and whose lower end is movably attached to the radiation image reading apparatus in a vertical direction;
a second link whose upper end is pivotably attached to an apparatus main body, and whose lower end is movably attached to the holding means to be conveyed in the vertical direction;
a connection shaft which pivotably connects the first link and the second link at a portion where the first link and the second link cross; and
an actuator which drives the lower end of either one of the first link and the second link in the vertical direction.

2. The radiation image reading apparatus of claim 1, which further includes:
a position regulating means which regulates the back plate holding means at a position where radiation image information is read; and
a pressing means which presses the back plate holding means against the position regulating means.

3. The radiation image reading apparatus of claim 2, which further includes an urging means which pushes the pressing member toward the position regulating member.

4. The radiation image reading apparatus of claim 2 or 3,
wherein a pressing force is released from the pressing member, due to a shift of the holding member from the separating position of the holding means to the engaging position, conducted by the conveyance means, and wherein the pressing force is applied to the pressing member, due to a shift of the holding member from the engaging position to the separating position, conducted by the conveyance means.

5. The radiation image reading apparatus of any one of claims 2 - 4, wherein the pressing member includes:
a first lever which is movably attached to the apparatus main body, and is moved by the holding member which is conveyed by the conveyance means from the reading position of the separating position to the engaging position;
a second lever which works with the first lever, and is moved by the holding member which is conveyed by the conveyance means from the engaging position to the separating position; and
a spring both ends of which are connected to the first lever and to the apparatus main body, and the spring urges the first lever to either the engaging position or the separating position.

6. The radiation image reading apparatus of any one of claims 1 to 5, wherein a separation assisting means, which assists the holding means to separate from either the engaging position or the separating position, is mounted on the holding means which is conveyed by the conveyance means.

7. The radiation image reading apparatus of any one of claims 1 to 6, wherein the holding means, which is conveyed by the conveyance means, includes
a magnet which attracts the front plate or the back plate, and
a first separation assisting means which helps either the front plate attracted by the magnet or the back plate attracted by the magnet, to separate in advance from any one of an edge of the front plate or an edge of the back plate.

8. The radiation image reading apparatus of any one of claims 1 to 7, further including a second separation assisting means which separates the holding means in a moving direction, when the holding means is conveyed from a position where a link is substantially vertical.

9. The radiation image reading apparatus of claim 8, further including a vertically moving roller which is mounted on the apparatus main body, wherein the second separation assisting means is mounted on a surface, which faces the roller, of the holding member to be conveyed, and specifically the second separation assisting means is a cam mounted on the surface, which faces the roller, of the holding member to be conveyed, wherein when the roller goes upward, the cam is pressed by the roller to guide the holding means in the conveyance direction.

10. The radiation image reading apparatus of claim 9,
wherein both the roller and the cam are mounted on plural positions.

11. The radiation image reading apparatus of claims 9 or 10, wherein the roller is driven by the actuator, and the roller and the lower end of the first link are connected by a linking mechanism which allows the lower end of the first link to go upward, after the roller goes upward.

12. A radiation image reading apparatus, which allows either one of
a holding section which movably supports a stimulable phosphor sheet, or
an image reading section which is arranged against a front surface of the stimulable phosphor sheet, and which radiates exciting light to read image information,
to move relatively against each other, and the radiation image reading apparatus obtains said image information,
wherein a first cleaning means is mounted on the holding section, and when either one of the holding section or the image reading section moves, the first cleaning means comes into contact with the image reading section, and cleans the image reading section.

13. The radiation image reading apparatus of claim 12, further includes a control means,
wherein the first cleaning means is mounted outside a reading range of the stimulable phosphor sheet, in the holding section,
wherein when image information carried in the stimulable phosphor sheet is read, the control means controls either one of the holding section or the image reading section in such a way that the image reading section is conveyed to a position within the reading range of the stimulable phosphor sheet, and
wherein when the cleaning operation is conducted by the first cleaning means, the control means controls either one of the holding section or the image reading section in such a way that the image reading section comes into contact with the first cleaning means mounted outside the reading range.

14. The radiation image reading apparatus of claim 12 or 13, wherein the first cleaning means is formed of a soft material.

15. The radiation image reading apparatus of any one of claims 12 - 14, wherein the first cleaning means has an electrostatic discharging function.

16. The radiation image reading apparatus of any one of claims 12 - 15, wherein the first cleaning means is detachably mounted on the holding means.

17. The radiation image reading apparatus of any one of claims 12 - 16, further includes a second cleaning means which is mounted on the image reading section, and when either one of the holding section or the image reading section is conveyed, the second cleaning means comes into contact with the stimulable phosphor sheet, and cleans the stimulable phosphor sheet.
